# EUROPÄISCHE PATENTSCHRIFT

(11) **EP 3 428 009 B1**
(45) Veröffentlichungstag und Bekanntmachung des Hinweises auf die Patenterteilung: **01.01.2020**
(21) Anmeldenummer: 18181430.2
(22) Anmeldetag: 03.07.2018
(51) Int. Cl.: B60N 2/50, B60N 2/52

(54) **FAHRZEUGSITZ MIT EINSTELLBAREM DÄMPFER**
VEHICLE SEAT WITH ADJUSTABLE DAMPER
SIÈGE DE VÉHICULE DOTÉ D'UN AMORTISSEUR RÉGLABLE

(30) Priorität: 10.07.2017 DE 102017115347
(43) Veröffentlichungstag der Anmeldung: 16.01.2019
(73) Patentinhaber: Grammer AG, 92224 Amberg (DE)
(72) Erfinder: Lorey, Konstantin, 92546 Schmidgaden (DE); Krivenkov, Konstantin, 92224 Amberg (DE)
(74) Vertreter: Hannke, Christian

(56) Entgegenhaltungen:
- DE-A1-102009 041 811
- DE-A1-102010 048 210
- DE-B3-102008 023 563

## Beschreibung

Die Erfindung betrifft einen Fahrzeugsitz mit einem Sitzoberteil und einem Sitzunterteil, wobei das Sitzoberteil und das Sitzunterteil durch ein Scherengestell verbunden sind, und mit einem Dämpfer, wobei das Scherengestell einen ersten Scherenarm und einen zweiten Scherenarm aufweist, wobei der erste Scherenarm und der zweite Scherenarm drehbar um eine gemeinsame Drehachse gelagert sind, wobei ein erstes Ende des Dämpfers mit dem ersten Scherenarm drehbar verbunden ist (siehe DE-A-10 2009 041 811).

Derartige Fahrzeugsitze werden in seiner Auslenkungsbewegung, welche durch das Scherengestell geführt wird, mittels eines Dämpfers gedämpft und dadurch Schwingungsbelastungen auf den Fahrzeugführer, welcher auf einem derartigen Fahrzeugsitz Platz genommen hat, reduziert.

Häufig kommen hierbei Endanschläge zum Einsatz, welche den Fahrzeugsitz im Falle einer vollständigen Auslenkung vor Beschädigungen schützen soll, wobei derartige Endanschläge den Komfort des Fahrzeugsitzes erheblich vermindern.

Weiter sind Fahrzeugsitze bekannt, welche durch eine Anpassung der Dämpferrate auf verschiedene Fahrsituationen reagieren können, jedoch in einem Normalbetrieb eine zu harte Dämpfung aufweisen, welche für den Fahrzeugführer als nachteilig empfunden und gefühlt wird oder sehr kostenintensiv sind.

Es ist demzufolge Aufgabe der vorliegenden Erfindung, die Nachteile des Standes der Technik zu überwinden und einen Fahrzeugsitz zu präsentieren, welcher im Normalbetrieb eine komfortable Dämpfung und zusätzlich einen effektiven Endanschlagschutz aufweist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, einen Fahrzeugsitz mit einem Sitzoberteil und einem Sitzunterteil bereitzustellen, wobei das Sitzoberteil und das Sitzunterteil durch ein Scherengestell verbunden sind, und mit einem Dämpfer, wobei das Scherengestell einen ersten Scherenarm und einen zweiten Scherenarm aufweist, wobei der erste Scherenarm und der zweite Scherenarm drehbar um eine gemeinsame Drehachse gelagert sind, wobei ein erstes Ende des Dämpfers mit dem ersten Scherenarm drehbar verbunden ist, wobei ein erstes Hebelelement und ein zweites Hebelelement vorgesehen sind, wobei ein erstes Ende des ersten Hebelelementes mit dem ersten Scherenarm drehbar verbunden ist und ein erstes Ende des zweiten Hebelelementes drehbar mit dem zweiten Scherenarm verbunden ist und ein zweites Ende des Dämpfers drehbar sowohl mit einem zweiten Ende des ersten Hebelelements als auch einem zweiten Ende des zweiten Hebelelementes verbunden ist.

Dies bedeutet insbesondere, dass bei Auslenkung des Fahrzeugsitzes, also einer Bewegung des Scherengestells, zusätzlich zu dem ersten Ende des Dämpfers das zweite Ende des Dämpfers durch das erste Hebelelement und dem zweiten Hebelelement zwangsgeführt wird. Durch eine derartige Zwangsführung ist es insbesondere möglich, durch Veränderung des Abstandes des ersten Endes des Dämpfers und des zweiten Endes des Dämpfers, welche aus der Zwangsführung des zweiten Endes des Dämpfers resultiert, die Dämpferkraft des Dämpfers einzustellen, insbesondere abhängig von der Auslenkbewegung des Scherengestells.

So ist es insbesondere möglich, die Dämpferkraft im Bereich der Endanschläge, also einer maximalen Auslenkung des Fahrzeugsitzes, deutlich gegenüber dem normalen Fahrbetrieb zu verändern. Im normalen Fahrbetrieb ist eine weiche Dämpfereinstellung bevorzugt, wohingegen im Bereich der Endanschläge eine harte Dämpfereinstellung bevorzugt wird, um eben einen tatsächlichen Endanschlag vermeiden zu können.

Der Fahrzeugsitz kann für Landfahrzeuge, Nutzfahrzeuge, Agrarfahrzeuge, Baustellenfahrzeuge, sonstige LKW's und PKW's sowie für Boote und Schiffe eingesetzt werden.

Gemäß einer bevorzugten Ausführungsform sind das erste Ende des ersten Hebelelements mittels einer ersten Drehachse mit dem ersten Scherenarm und das erste Ende des zweiten Hebelelements mittels einer zweiten Drehachse mit dem zweiten Scherenarm drehbar verbunden und das zweite Ende des ersten Hebelelements, das zweite Ende des zweiten Hebelelements und das zweite Ende des Dämpfers mittels einer dritten Schwenkachse verbunden.

Insbesondere sind das erste Ende des ersten Hebelelements mittels der ersten Drehachse direkt mit dem ersten Scherenarm und das erste Ende des zweiten Hebelelements mittels der zweiten Drehachse direkt mit dem zweiten Scherenarm drehbar verbunden. Direkt bedeutet hierbei, dass keine weiteren Bauteile oder Bauelemente für die Verbindung vorgesehen sind.

Insbesondere sind die erste Drehachse, die zweite Drehachse und die dritte Drehachse paarweise parallel zueinander angeordnet. Insbesondere verlaufen die erste, zweite und dritte Drehachse sowie die gemeinsame Drehachse in einer Fahrzeugsitzbreitenrichtung des Fahrzeugsitzes.

Gemäß einer weiteren bevorzugten Ausführungsform schließen in einem ersten Zustand, in welchem der Fahrzeugsitz vollständig eingefedert ist, eine erste Verbindungslinie zwischen der ersten Schwenkachse und der dritten Schwenkachse und eine zweite Verbindungslinie zwischen der zweiten Schwenkachse und der dritten Schwenkachse einen spitzen Winkel ein, wobei der spitze Winkel bevorzugt zwischen 5° und 45° liegt, und wobei der Winkel bevorzugt kleiner als 10°, bevorzugter kleiner als 5° und besonders bevorzugt kleiner als 3° ist.

Vollständig eingefedert bedeutet hierbei, dass ein Abstand zwischen dem Sitzoberteil und dem Sitzunterteil minimal ist, also das Scherengestell maximal zusammengeklappt ist. Alternativ kann anstelle von vollständig eingefedert auch maximal eingefedert verwendet werden.

Eine derartige Ausgestaltung ist sinnvoll, um mögliche auftretende Totpunkte in der Bewegung des ersten Hebelelements, des zweiten Hebelelements und entsprechend dem zweiten Ende des Dämpfers zu vermeiden.

Entsprechend gilt ebenso für eine weitere bevorzugte Ausführungsform, dass in einem zweiten Zustand, in welchem der Fahrzeugsitz vollständig ausgefedert ist, eine erste Verbindungslinie zwischen der ersten Schwenkachse und der dritten Schwenkachse und eine zweite Verbindungslinie zwischen der zweiten Schwenkachse und der dritten Schwenkachse entweder einen stumpfen Winkel einschließen, wobei der Winkel bevorzugt größer als 170° und bevorzugter größer als 175° ist, oder einen Winkel von 180° einschließen.

Es ist hierbei denkbar, dass der Winkel 180° betragen kann, da aufgrund der Gravitationskraft kein Totpunkt auftreten kann und so eine Bewegung des Sitzoberteils gegenüber dem Sitzunterteil möglich ist.

Gemäß einer weiteren bevorzugten Ausführungsform ist das erste Hebelelement in zumindest einer Richtung gesehen senkrecht zu der ersten Drehachse U-förmig mit einem ersten Schenkel und einem zweiten Schenkel ausgebildet, wobei der erste Schenkel mit dem ersten Hebelelement und der zweite Schenkel mit der dritten Drehachse drehbar verbunden ist.

Insbesondere erstrecken sich der erste Schenkel und der zweite Schenkel in Richtung der Verbindungslinie von erster Drehachse und dritter Drehachse. Die Richtung senkrecht zu der ersten Drehachse kann insbesondere senkrecht zu der Verbindungslinie stehen.

Ebenso vorzugsweise erstreckt sich der zweite Schenkel in Richtung der Verbindungslinie weiter als der erste Schenkel.

Gemäß einer bevorzugten Ausführungsform ist das zweite Hebelelement plattenähnlich ausgebildet.

Gemäß einer besonders bevorzugten Ausführungsform ist das zweite Ende des zweiten Hebelelements in Längserstreckungsrichtung der dritten Drehachse gesehen zwischen dem ersten Schenkel und dem zweiten Schenkel angeordnet.

Das bedeutet, dass insbesondere bei einer U-förmigen Ausgestaltung des ersten Hebelelements das zweite Hebelelement und das erste Hebelelement ineinander eingreifen, wodurch der insgesamte Platzbedarf verringert werden kann.

Eine gemäß einer bevorzugten Ausführungsform vorgesehene Ausgestaltung des Scherengestells ist derart, dass der erste Scherenarm und der zweite Scherenarm jeweils ein Loslager und ein Festlager aufweisen, wobei das Festlager des ersten Scherenarms mit dem Sitzoberteil und das Festlager des zweiten Scherenarms mit dem Sitzunterteil verbunden sind.

Insbesondere ist das erste Ende des Dämpfers mit dem Loslager des ersten Scherenarms verbunden. Das heißt, dass bei einer Auslenkung des Scherengestells das erste Ende des Dämpfers entsprechend der Bewegung des ersten Scherenarms folgt.

Gemäß einer weiteren bevorzugten Ausführungsform ist ein Abstand der ersten Drehachse zu der gemeinsamen Drehachse geringer als ein Abstand der ersten Drehachse zu dem Loslager des ersten Scherenarms, und wobei ein Abstand der zweiten Drehachse zu der gemeinsamen Drehachse geringer ist als ein Abstand der zweiten Drehachse zu dem Loslager des zweiten Scherenarms.

Hierdurch kann weiterer Bauraum eingespart werden und durch Verkleinerung der Abmessungen der Hebelelemente Materialkosten und Gewicht eingespart werden.

Weiter sind der Abstand der ersten Drehachse zu der dritten Drehachse und der Abstand der zweiten Drehachse zu der dritten Drehachse im Wesentlichen gleich. Weiter ist es denkbar, dass der Abstand der ersten Drehachse zu der gemeinsamen Drehachse und der Abstand der zweiten Drehachse zu der gemeinsamen Drehachse ebenso im Wesentlichen gleich ausgebildet sind.

Durch Veränderung der jeweiligen Abstände der Drehachsen zueinander kann die Dämpferrate angepasst werden.

Gemäß dem erfindungsgemäßen Gegenstand der vorliegenden Anmeldung kann die Dämpferrate derart ausgebildet werden, dass in einem Normalbetrieb eine weiche Dämpfercharakteristik vorherrscht und bei einer Auslenkung in Richtung der maximalen Auslenkung des Fahrzeugsitzes durch Änderung des zweiten Endes des Dämpfers relativ zum ersten Ende des Dämpfers die Dämpferrate angepasst wird.

Ebenso kann mittels des vorgeschlagenen Fahrzeugsitzes das Verhältnis der Abstandsänderung Sitzoberteil zu Sitzunterteil und Längenänderung des Dämpfers derart ausgebildet werden, dass eine Auslenkung aus dem oder in den ersten Zustand ein Verhältnis von Abstandsänderung Sitzoberteil zu Sitzunterteil zu Längenänderung des Dämpferelements ≤ 1 ist, und eine Auslenkung aus dem oder in den zweiten Zustand ein Verhältnis von Abstandsänderung Sitzoberteil zu Sitzunterteil zu Längenänderung des Dämpferelements ebenfalls ≤ 1 ist.

In einem dritten Zustand, also dem normalen Betrieb oder Normalzustand, in welchem vorzugsweise der Dämpfungsweg in Fahrzeugsitzhöhenrichtung nach oben und nach unten im Wesentlichen gleich ist, ist das Verhältnis von Abstandsänderung Sitzoberteil zu Sitzunterteil zu Längenänderung des Dämpferelements >>1, also extrem groß, idealerweise unendlich. Das bedeutet, dass eine relativ große Auslenkung des Fahrzeugsitzes lediglich eine kleine Längenänderung des Dämpfers hervorruft. Entsprechend ändert sich die Dämpfungskraft lediglich geringfügig bzw. in einem kleinen Maß.

Weiter ist es vorteilhaft, wenn der Fahrzeugsitz zusätzlich eine Luftfeder zum Federn des Fahrzeugsitzes umfasst, wobei die Luftfeder einerseits mit dem Scherengestell und andererseits mit dem Sitzoberteil oder dem Sitzunterteil verbunden ist.

Weiter wird die zugrunde liegende Aufgabe gelöst von einem Nutzfahrzeug umfassend einen Fahrzeugsitz nach einer der beschriebenen Ausführungsformen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit der Zeichnung zu entnehmen. Hierbei zeigen:
- Fig. 1: einen Fahrzeugsitz gemäß einer Ausführungsform;
- Fig. 2A, 2B: einen Fahrzeugsitz gemäß einer Ausführungsform in eingefedertem Zustand in einer Seitenansicht und perspektivischen Ansicht;
- Fig. 3A, 3B: einen Fahrzeugsitz gemäß einer Ausführungsform im mittleren Zustand in einer Seitenansicht und perspektivischen Ansicht;
- Fig. 4A, 4B: einen Fahrzeugsitz gemäß einer Ausführungsform mit ausgefedertem Zustand in einer Seitenansicht und perspektivischen Ansicht;
- Fig. 5A, 5B, 5C: einen Fahrzeugsitz in verschiedenen Auslenkungen und die entsprechenden Dämpferauslenkungen;
- Fig. 6: eine Darstellung der Kennlinie des Dämpfers.

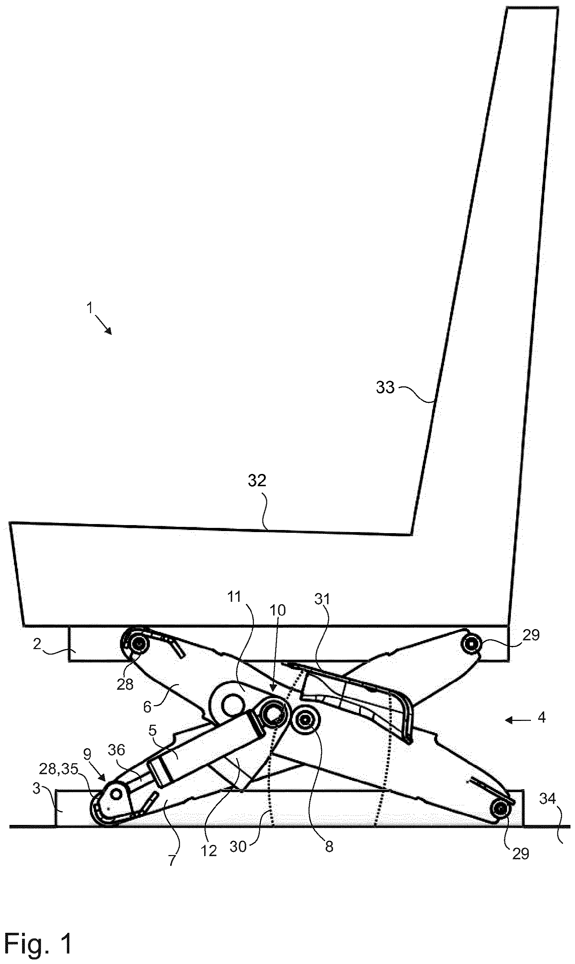

In der Figur 1 ist ein Fahrzeugsitz 1 nach einer besonders bevorzugten Ausführungsform gezeigt, wobei der Fahrzeugsitz 1 ein Sitzoberteil 2 und ein Sitzunterteil 3 aufweist, wobei mit dem Sitzoberteil 2 ein Sitzteil 32 sowie eine Rückenlehne 33 angeordnet sein können. Das Sitzunterteil 3 hingegen ist bevorzugt mit einem Karosserieboden 34 oder dergleichen verbunden.

Wie zu erkennen ist, sind weiter das Sitzoberteil 2 und das Sitzunterteil 3 mittels eines Scherengestells 4 miteinander verbunden, wobei das Scherengestell 4 mindestens einen ersten Scherenarm 6 und mindestens einen zweiten Scherenarm 7 aufweist, wobei der erste Scherenarm 6 und der zweite Scherenarm 7 mittels einer gemeinsamen Drehachse 8 drehbar verbunden sind.

Dabei ist vorliegend der erste Scherenarm 6 mittels eines Festlagers 29 mit dem Sitzoberteil 2 insbesondere drehbar verbunden, wohingegen der zweite Scherenarm 7 mittels eines Festlagers 29 mit dem Sitzunterteil 3 insbesondere drehbar verbunden ist. Jeder Scherenarm weist darüber hinaus jeweils ein Loslager 28 auf, welches mit dem jeweiligen anderen Fahrzeugsitzteil verbunden ist, beispielsweise für den ersten Scherenarm 6 ist das Loslager mit dem Sitzunterteil 3 verbunden, insbesondere gleitend verbunden.

Ein erstes Ende 9 des Dämpfers 5 ist mit dem ersten Scherenarm 6 verbunden und ein zweites Ende 10 des Dämpfers 5 ist einerseits mit einem ersten Hebelelement 11 und andererseits mit einem zweiten Hebelelement 12 drehbar verbunden, wobei zusätzlich das erste Hebelelement 11 mit dem ersten Scherenarm 6 und das zweite Hebelelement 12 mit dem zweiten Scherenarm 7 verbunden ist. Insbesondere ist das erste Ende 9 des Dämpfers 5 im Bereich des Loslagers 28 angeordnet, also an einem ersten Ende 35 des ersten Scherenarms 6.

Bei einer Auslenkung des Fahrzeugsitzes 1, welche ebenso in einer Auslenkung des Scherengestells 4 resultiert, wird das zweite Ende 10 des Dämpfers 5 mittels des ersten Hebelelements 11 und des zweiten Hebelelements 12 zwangsgeführt. Hierdurch ist es möglich, den Abstand des ersten Endes 9 des Dämpfers 5 zu dem zweiten Ende 10 des Dämpfers zu variieren, insbesondere wird hierbei eine Kolbenstange 36 des Dämpfers 5 aus einem oder in ein Dämpfergehäuse 37 verlagert.

Eine genauere Darstellung wird in den nachfolgenden Figuren gegeben, wobei Bauteile zur Übersichtlichkeit weggelassen werden können.

Gleiche Bauteile haben die gleichen Bezugszeichen.

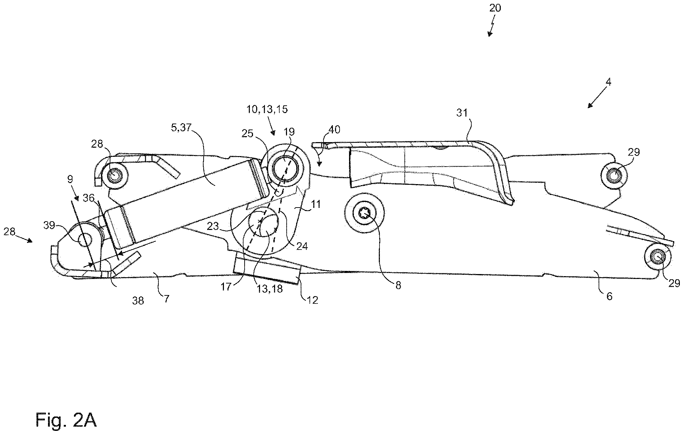

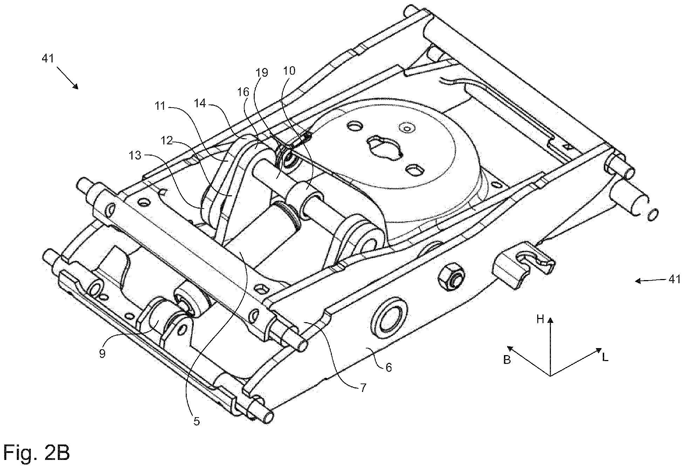

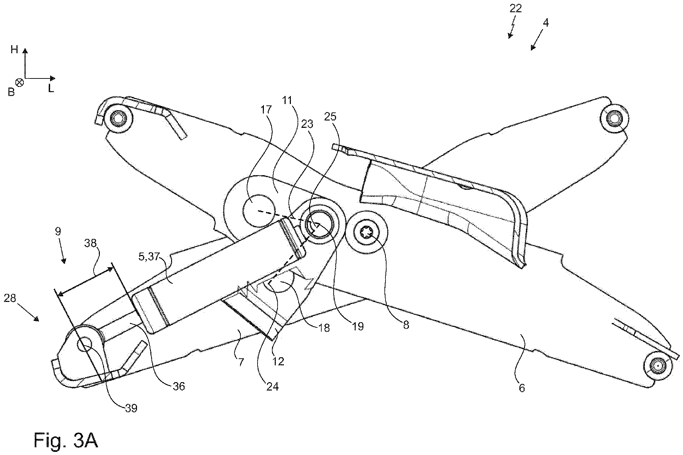

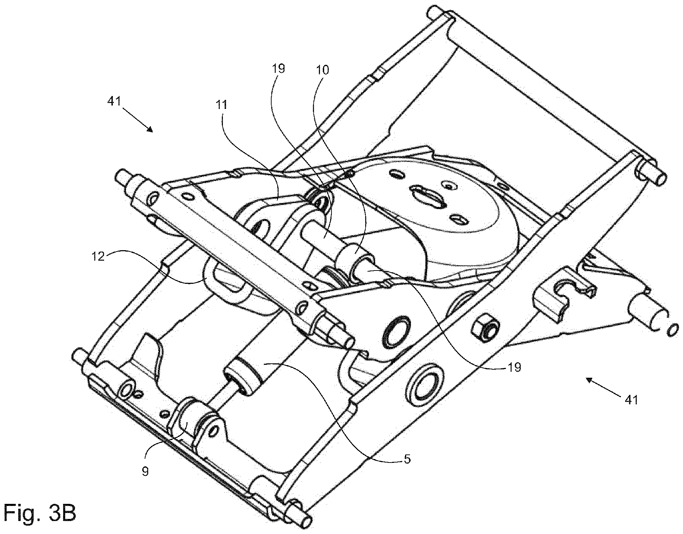

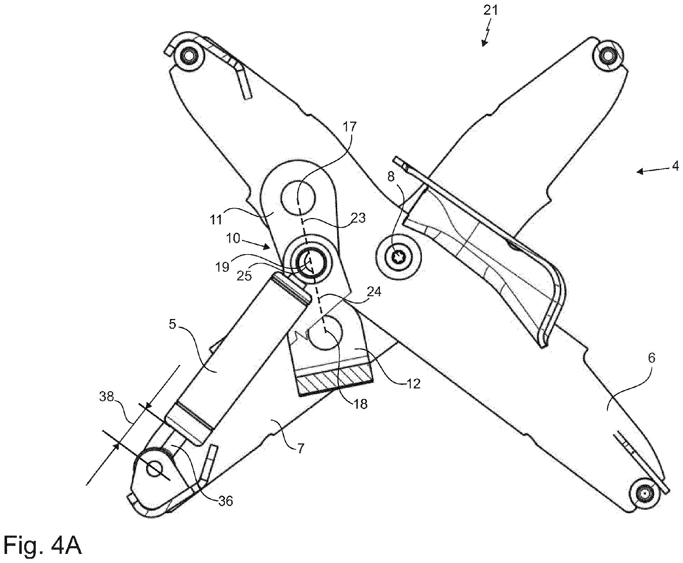

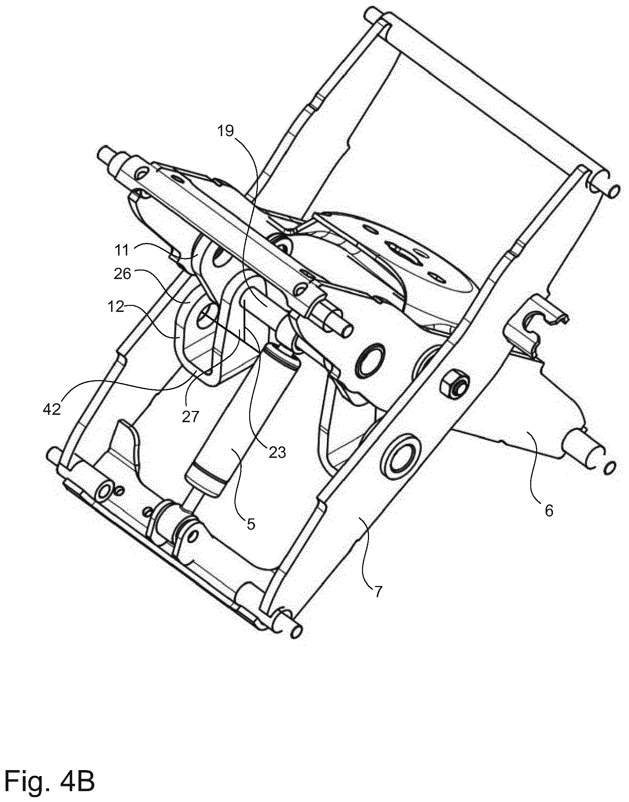

Die Figuren 2A und 2B zeigen den Fahrzeugsitz 1 in einem ersten Zustand 20, also in einem vollständig eingefederten Zustand, die Figuren 3A und 3B den Fahrzeugsitz 1 in einem dritten Zustand 22, also in dem Zustand des normalen Betriebs, insbesondere ohne oder mit geringer Krafteinwirkung, und die Figuren 4A und 4B den Fahrzeugsitz 1 in einem zweiten Zustand 21, also einem vollständig ausgefederten Zustand.

Wie in den Figuren 2A bis 4B zu erkennen ist, ist das erste Hebelelement 11 mittels einer ersten Drehachse 17 mit dem ersten Scherenarm 6 drehbar verbunden, und das zweite Hebelelement 12 mittels einer zweiten Drehachse 18 mit dem zweiten Scherenarm 7 drehbar verbunden, und das zweite Ende 10 des Dämpfers 5 mittels einer dritten Drehachse 19 mit dem ersten Hebelelement 11 und dem zweiten Hebelelement 12. Die Länge 38 der Kolbenstange 36 ist angegeben als Länge von einer vierten Drehachse 39, mittels welcher das erste Ende 9 des Dämpfers mit dem ersten Scherenarm 6 drehbar verbunden ist, bis zu dem Dämpfergehäuse 37. Insbesondere sind die Hebelelemente 11, 12 lediglich über die entsprechenden Drehachsen 17, 18 mit den entsprechenden Scherenarmen 6, 7 verbunden. Das heißt, dass die Hebelelemente 11, 12 mittels der Drehachsen 17, 18 direkt mit den Scherenarmen 6, 7 verbunden sind.

Die Figuren 2A und 2B zeigen dabei den Fahrzeugsitz in dem ersten Zustand 20, in welchem das Scherengestell 4 vollständig bzw. maximal eingefedert ist. In diesem ersten Zustand 20 sind das erste Hebelelement 11 und das zweite Hebelelement 12 in einem Winkel 25 angeordnet. Dabei ist der Winkel 25 zwischen einer ersten Verbindungslinie 23, welche zwischen der ersten Drehachse 17 und der dritten Drehachse 19 verläuft, und einer zweiten Verbindungslinie 24, welche zwischen der zweiten Drehachse 18 und der dritten Drehachse 19 verläuft, eingeschlossen. Insbesondere handelt es sich hierbei im Falle des ersten Zustands 20 um einen spitzen Winkel 25. Insbesondere ist ein Abstand der ersten Drehachse 17 zu der dritten Drehachse 19 größer als ein Abstand der zweiten Drehachse 18 zu der dritten Drehachse 19, wodurch eine Art Anfangsbedingung für die Zwangsführung des zweiten Endes 10 des Dämpfers 5 gegeben ist. Würde der Winkel 25 0° betragen, so wäre von vornherein zunächst keine bestimmte Drehrichtung des zweiten Endes 10 des Dämpfers 5 vorgegeben. Durch eine derartige Ausgestaltung wird hierbei jedoch eine Drehrichtung des zweiten Endes 10 bestimmt, in dem vorliegenden Fall ausgehend von dem ersten Zustand 20 übergehend in zunächst den dritten Zustand 22 in Richtung des Pfeils 40, welcher die Drehrichtung 40 anzeigt. Durch diese Drehrichtung 40, vorliegend in der Zeichnung eine Drehung nach rechts, bewegt sich das zweite Ende 10 des Dämpfers 5 zu der gemeinsamen Drehachse 8 hin.

Die Figur 2B zeigt den Gegenstand der Figur 2A in einer perspektivischen Darstellung noch einmal. Genauer sind zwei Scherenpaare 41 gezeigt, wobei jedes Scherenpaar einen ersten Scherenarm 6 und einen zweiten Scherenarm 7 aufweist. Ebenso sind an jedem Scherenarm 6, 7 die entsprechenden Hebelelemente 11, 12 angeordnet. Insbesondere ist die gesamte Vorrichtung symmetrisch ausgebildet in Bezug auf eine Ebene E, welche aufgespannt wird durch eine Höhenrichtung H und eine Längsrichtung L des Fahrzeugsitzes. Insbesondere kann die Ebene E teilweise den Dämpfer 5 aufweisen, das heißt, dass der Dämpfer 5 derart angeordnet ist, dass er zu sich selbst symmetrisch ist.

Die Figuren 3A und 3B zeigen den Fahrzeugsitz 1 in dem zweiten Zustand 21, also den Fahrzeugsitz 1 in dem normalen Betriebszustand. Wie insbesondere aus einem Vergleich der Figuren 2A und 3A zu erkennen ist, hat sich die Länge 38 der Kolbenstange deutlich verlängert, nachdem der Dämpfer Dämpfungsarbeit geleistet hat. Weiter aus einem Vergleich ist zu erkennen, dass das zweite Ende 10 des Dämpfers 5 in Richtung der gemeinsamen Drehachse 8 bewegt wurde aufgrund der Zwangsführung durch das erste Hebelelement 11 und das zweite Hebelelement 12.

Befindet sich der Fahrzeugsitz 1 in dem zweiten Zustand 21, so wird aufgrund der Zwangsführung des zweiten Endes 10 des Dämpfers 5 bei einer Auslenkung des Fahrzeugsitzes 1 in Höhenrichtung H gesehen nach oben oder nach unten das zweite Ende 10 des Dämpfers 5 relativ zum ersten Ende 9 des Dämpfers nicht oder nur wenig bewegt. Das bedeutet, dass ausgehend von dem dritten Zustand im normalen Betrieb die Dämpferkraft bzw. die Dämpferwirkung des Dämpfers 5 nicht oder nur wenig verändert wird. Dies wird als Komfortbereich für den Fahrzeugführer bezeichnet, insbesondere dann, wenn eine weiche Dämpfercharakteristik eingestellt ist. Wird der Fahrzeugsitz 1 jedoch aus dem dritten Zustand 22 stark nach oben oder unten ausgelenkt, also in den ersten Zustand 20 oder den zweiten Zustand 21, in welchem der Fahrzeugsitz maximal eingefedert bzw. ausgefedert ist, so ändert sich die Länge 38 der Kolbenstange 36 erheblich und dadurch im Resultat auch die Dämpfung, insbesondere von einer weichen hin zu einer harten Dämpfercharakteristik, um einen möglichen Endanschlag zu vermeiden. Insbesondere kann der Winkel 25 zwischen der ersten Verbindungslinie 23 und der zweiten Verbindungslinie 24 für den dritten Zustand 22 zwischen 45° und 80° betragen, bevorzugter zwischen 50° und 70° und besonders bevorzugt 60° betragen.

Die Figur 3B zeigt in analoger Weise zur Figur 2B den Gegenstand der Figur 3A in einer perspektivischen Ansicht.

Die Figuren 4A und 4B zeigen den Fahrzeugsitz in dem zweiten Zustand 21, in welchem der Fahrzeugsitz 1 maximal ausgelenkt ist.

Wie ebenso aus einem Vergleich der Figur 4A mit der Figur 3A zu erkennen ist, ist die Länge 38 der Kolbenstange 36 wieder erheblich reduziert. Der Winkel 25 zwischen der ersten Verbindungslinie 23 und der zweiten Verbindungslinie 24 beträgt hierbei im Wesentlichen 180°, also die Verbindungslinien 23, 24 sind auf einer gemeinsamen Linie angeordnet. Weiter ist zu erkennen, dass das zweite Ende 10 von der gemeinsamen Drehachse 8 wegbewegt wurde aufgrund der Zwangsführung.

Entsprechend den Figuren 2B und 3B zeigt die Figur 4B den Gegenstand der Figur 4A in einer perspektivischen Ansicht.

Insbesondere der Figur 4B ist die genauere Ausgestaltung der Hebelelemente 11, 12 zu entnehmen. Das erste Hebelelement 11 ist hierbei zumindest in einer Richtung senkrecht zu der Erstreckungsrichtung der dritten Drehachse 19 U-förmig ausgebildet und umfasst einen ersten Schenkel 26 und einen zweiten Schenkel 27, wobei die Schenkel 26, 27 mittels eines Verbindungselements 42 miteinander verbunden sind. Vorliegend erstreckt sich der zweite Schenkel 27 in Richtung der ersten Verbindungslinie 23 weiter als der erste Schenkel 26.

Weiter ist den Figuren zu entnehmen, dass das zweite Hebelelement 12, insbesondere das zweite Ende 16 des zweiten Hebelelements 12, in Erstreckungsrichtung der dritten Drehachse 19 gesehen zwischen dem ersten Schenkel 26 und dem zweiten Schenkel 27 angeordnet ist. Das zweite Hebelelement 12 kann plattenähnlich ausgebildet sein.

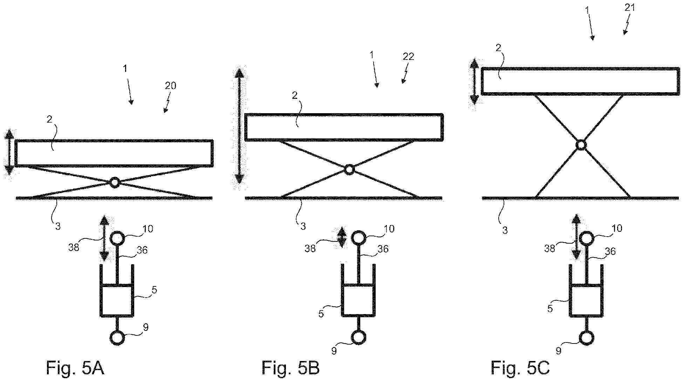

Die Figuren 5A, 5B und 5C zeigen die verschiedenen Zustände des Fahrzeugsitzes 1 nochmals in einer schematischen Darstellung, wobei insbesondere ein Vergleich zwischen der Auslenkung des Fahrzeugsitzes 1, insbesondere des Sitzoberteils 2 gegenüber dem Sitzunterteil 3, zu der Auslenkung des Dämpfers 5 zu erkennen ist.

Für den ersten Zustand 20, gezeigt in der Figur 5A, ist das Verhältnis von Auslenkung des Fahrzeugsitzes 1 zu der Auslenkung des Dämpfers 5, insbesondere die Änderung der Länge 38 der Kolbenstange 36, kleiner oder gleich 1 (≤1).

Für den zweiten Zustand 21, gezeigt in der Figur 5C, ist das Verhältnis von Auslenkung des Fahrzeugsitzes 1 zu der Auslenkung des Dämpfers 5, insbesondere die Änderung der Länge 38 der Kolbenstange 36, ebenso kleiner oder gleich 1 (≤1).

Für den dritten Zustand 22 hingegen, gezeigt in der Figur 5B, ist das Verhältnis von Auslenkung des Fahrzeugsitzes 1 zu der Auslenkung des Dämpfers 5, insbesondere die Änderung der Länge 38 der Kolbenstange 36, größer als 1, insbesondere sehr viel größer als 1 (>> 1).

Das bedeutet insbesondere, dass bei einer Auslenkung des Sitzoberteils 3 gegenüber dem Sitzunterteil 3 in Richtung nach oben oder nach unten aus dem dritten Zustand 22 heraus in den ersten Zustand 20 oder in den zweiten Zustand 21 die Dämpfercharakteristik aufgrund der Zwangsführung des Dämpfers 5 mittels den Hebelelementen 11, 12 stark ansteigt und die Gefahr eines Endanschlags minimiert.

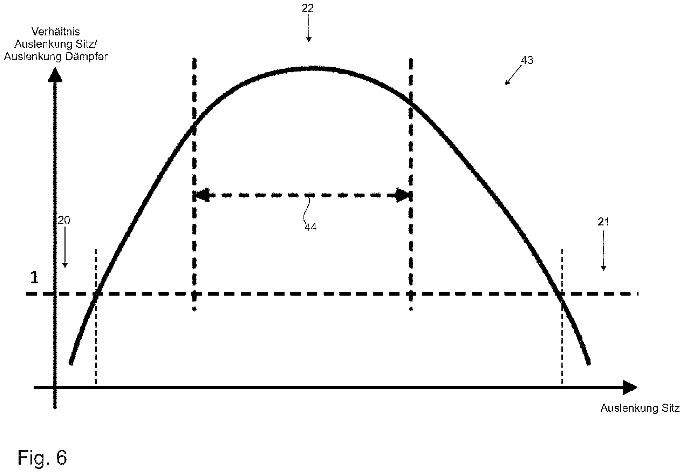

Eine derartige Veränderung des Verhältnisses resultiert in einer Dämpfercharakteristik 43, wie sie in der Figur 6 dargestellt ist.

Durch die Zwangsführung des zweiten Endes 10 des Dämpfers 5 kann eine Dämpfercharakteristik 43 erzielt werden, wie in der Figur 6 dargestellt. Insbesondere in einem normalen Betrieb ändert sich die Dämpferwirkung nur geringfügig, wobei dieser Bereich als ein Komfortbereich 44 angegeben ist. Wie obig erwähnt, ist im Komfortbereich das Verhältnis von Auslenkung des Fahrzeugsitzes 1 zu der Auslenkung des Dämpfers 5, insbesondere die Änderung der Länge 38 der Kolbenstange 36, größer als 1, insbesondere sehr viel größer als 1 (>> 1). Durch die geringe Auslenkung der Kolbenstange 36 verändert sich die Dämpfercharakteristik 43 in dem Komfortbereich 44 lediglich geringfügig oder auch gar nicht.

Die Bereiche der Dämpfercharakteristik 43, die ein Verhältnis von kleiner oder gleich 1 aufweisen, sind dem ersten Zustand 20 bzw. dem zweiten Zustand 21 zuzuordnen, wie ebenso bereits ausgeführt.

Die Bereiche mit einem Verhältnis von ≥ 1, also die Bereiche zwischen dem ersten Zustand 20 und dem dritten Zustand 22 sowie dem dritten Zustand 22 und dem zweiten Zustand 21, betreffen Auslenkungen des Fahrzeugsitzes, die eine erhöhte Dämpfung benötigen, jedoch noch nicht im kritischen Bereich der Endanschläge liegen.

Zusammengefasst erhöht sich aufgrund der Zwangsführung des Dämpfers 5 die Dämpfercharakteristik 43 bei einer starken Auslenkung des Sitzoberteils 3 nach oben oder nach unten in den ersten Zustand 20 oder zweiten Zustand 21 erheblich, so dass ein Endanschlag verhindert werden kann oder zumindest abgeschwächt werden kann. Im normalen Betrieb, also wenn sich der Fahrzeugsitz 1 in einer Mittellage in dem Komfortbereich 44 befindet, ändert sich die Dämpferauslenkung wenig oder sogar gar nicht.

Grundsätzlich ist auch denkbar beide Dämpferaugen durch einen Hebelmechanismus zu führen. Außerdem können die Hebelelemente 11 und 12 nicht nur an den Schwingenarmen 6, 7 befestigt werden. Es kann auch die Kombination aus Sitzoberteil/Schwingarm oder Sitzunterteil/Schwingarm sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzoberteil
- 3: Sitzunterteil
- 4: Scherengestell
- 5: Dämpfer
- 6: erster Scherenarm
- 7: zweiter Scherenarm
- 8: gemeinsame Drehachse
- 9: erstes Ende des Dämpfers
- 10: zweites Ende des Dämpfers
- 11: erstes Hebelelement
- 12: zweites Hebelelement
- 13: erstes Ende des ersten Hebelelements
- 14: zweites Ende des ersten Hebelelements
- 15: erstes Ende des zweiten Hebelelements
- 16: zweites Ende des zweiten Hebelelements
- 17: erste Drehachse
- 18: zweite Drehachse
- 19: dritte Drehachse
- 20: erster Zustand
- 21: zweiter Zustand
- 22: dritter Zustand
- 23: erste Verbindungslinie
- 24: zweite Verbindungslinie
- 25: Winkel
- 26: erster Schenkel
- 27: zweiter Schenkel
- 28: Loslager
- 29: Festlager
- 30: Luftfeder
- 31: Luftfederhalterung
- 32: Sitzteil
- 33: Rückenlehne
- 34: Karosserieboden
- 35: erstes Ende erster Scherenarm
- 36: Kolbenstange
- 37: Dämpfergehäuse
- 38: Länge der Kolbenstange
- 39: vierte Drehachse
- 40: Drehrichtung
- 41: Scherenpaar
- 42: Verbindungselement
- 43: Dämpfercharakteristik
- 44: Komfortbereich
- E: Ebene
- H: Höhenrichtung
- B: Breitenrichtung
- L: Längsrichtung

## Patentansprüche

1. Fahrzeugsitz (1) mit einem Sitzoberteil (2) und einem Sitzunterteil (3), wobei das Sitzoberteil (2) und das Sitzunterteil (3) durch ein Scherengestell (4) verbunden sind, und mit einem Dämpfer (5), wobei das Scherengestell (4) einen ersten Scherenarm (6) und einen zweiten Scherenarm (7) aufweist, wobei der erste Scherenarm (6) und der zweite Scherenarm (7) drehbar um eine gemeinsame Drehachse (8) gelagert sind, wobei ein erstes Ende (9) des Dämpfers (5) mit dem ersten Scherenarm (6) drehbar verbunden ist,
**dadurch gekennzeichnet, dass**
ein erstes Hebelelement (11) und ein zweites Hebelelement (12) vorgesehen sind, wobei ein erstes Ende (13) des ersten Hebelelementes (11) mit dem ersten Scherenarm (6) drehbar verbunden ist und ein erstes Ende (15) des zweites Hebelelementes (12) drehbar mit dem zweiten Scherenarm (7) verbunden ist und ein zweites Ende (10) des Dämpfers drehbar sowohl mit einem zweiten Ende (14) des ersten Hebelelements (11) als auch einem zweiten Ende (16) des zweiten Hebelelementes (12) verbunden ist.

2. Fahrzeugsitz (1) nach Anspruch 1,
**dadurch gekennzeichnet, dass**
das erste Ende (13) des ersten Hebelelements (6) mittels einer ersten Drehachse (17) mit dem ersten Scherenarm (6) und das erste Ende (15) des zweiten Hebelelements (7) mittels einer zweiten Drehachse (18) mit dem zweiten Scherenarm (7) drehbar verbunden sind und das zweite Ende (14) des ersten Hebelelements (6), das zweite Ende (16) des zweiten Hebelelements (7) und das zweite Ende des Dämpfers (10) mittels einer dritten Schwenkachse (19) verbunden sind.

3. Fahrzeugsitz (1) nach Anspruch 2,
**dadurch gekennzeichnet, dass**
in einem ersten Zustand (20), in welchem der Fahrzeugsitz vollständig eingefedert ist, eine erste Verbindungslinie (23) zwischen der ersten Schwenkachse (17) und der dritten Schwenkachse (19) und eine zweite Verbindungslinie (24) zwischen der zweiten Schwenkachse (18) und der dritten Schwenkachse (19) einen spitzen Winkel (25) einschließen, wobei der Winkel (25) bevorzugt kleiner als 10°, bevorzugter kleiner als 5° und besonders bevorzugt kleiner als 3° ist.

4. Fahrzeugsitz (1) nach Anspruch 2 oder 3,
**dadurch gekennzeichnet, dass**
in einem zweiten Zustand (21), in welchem der Fahrzeugsitz (1) vollständig ausgefedert ist, eine erste Verbindungslinie (23) zwischen der ersten Schwenkachse (17) und der dritten Schwenkachse (19) und eine zweite Verbindungslinie (24) zwischen der zweiten Schwenkachse (18) und der dritten Schwenkachse (19) entweder einen stumpfen Winkel (25) einschließen, wobei der Winkel (25) bevorzugt größer als 170° und bevorzugter größer als 175° ist, oder einen Winkel (25) von 180° einschließen.

5. Fahrzeugsitz (1) nach einem der Ansprüche 2 bis 4,
**dadurch gekennzeichnet, dass**
das erste Hebelelement (11) in zumindest einer Richtung gesehen senkrecht zu der ersten Drehachse (17) U-förmig und mit einem ersten Schenkel (26) und einem zweiten Schenkel (27) ausgebildet ist, wobei der erste Schenkel (26) mit dem ersten Scherenarm (6) und der zweite Schenkel (27) mit der dritten Drehachse (19) drehbar verbunden sind.

6. Fahrzeugsitz (1) nach einem der Ansprüche 2 bis 5,
**dadurch gekennzeichnet, dass**
das zweite Hebelelement (12) plattenähnlich ausgebildet ist.

7. Fahrzeugsitz (1) nach Anspruch 5,
**dadurch gekennzeichnet, dass**
das zweite Ende (16) des zweiten Hebelelements (12) in Längserstreckungsrichtung der dritten Drehachse (19) gesehen zwischen dem ersten Schenkel (26) und dem zweiten Schenkel (27) angeordnet ist.

8. Fahrzeugsitz (1) nach einem der Ansprüche 2 bis 7,
**dadurch gekennzeichnet, dass**
der erste Scherenarm (6) und der zweite Scherenarm (7) jeweils ein Loslager (28) und ein Festlager (29) aufweisen, wobei das Festlager (29) des ersten Scherenarms (6) mit dem Sitzoberteil (2) und das Festlager (29) des zweiten Scherenarms (7) mit dem Sitzunterteil (3) verbunden sind.

9. Fahrzeugsitz (1) nach Anspruch 8,
**dadurch gekennzeichnet, dass**
ein Abstand der ersten Drehachse (17) zu der gemeinsamen Drehachse (8) geringer ist als ein Abstand der ersten Drehachse (17) zu dem Loslager (28) des ersten Scherenarms (6), und wobei ein Abstand der zweiten Drehachse (18) zu der gemeinsamen Drehachse (8) geringer ist als ein Abstand der zweiten Drehachse (18) zu dem Loslager (28) des zweiten Scherenarms (7).

10. Fahrzeugsitz (1) nach einem der vorangegangenen Ansprüche,
**dadurch gekennzeichnet, dass**
der Fahrzeugsitz (1) zusätzlich eine Luftfeder (30) zum Federn des Fahrzeugsitzes (1) umfasst, wobei die Luftfeder (30) einerseits mit dem Scherengestell (4) und andererseits mit dem Sitzoberteil (2) oder dem Sitzunterteil (3) verbunden ist.

11. Nutzfahrzeug, umfassend einen Fahrzeugsitz (1) nach einem der Ansprüche 1 bis 10.

## Claims

1. Vehicle seat (1) comprising an upper seat part (2) and a lower seat part (3), the upper seat part (2) and the lower seat part (3) being connected by a scissor-action frame (4), and comprising a damper (5), the scissor-action frame (4) comprising a first scissor arm (6) and a second scissor arm (7), the first scissor arm (6) and the second scissor arm (7) being mounted so as to be rotatable about a common swivel axis (8), a first end (9) of the damper (5) being rotatably connected to the first scissor arm (6),
**characterised in that**
a first lever element (11) and a second lever element (12) are provided, a first end (13) of the first lever element (11) being rotatably connected to the first scissor arm (6) and a first end (15) of the second lever element (12) being rotatably connected to the second scissor arm (7) and a second end (10) of the damper being rotatably connected to a second end (14) of the first lever element (11) and to a second end (16) of the second lever element (12).

2. Vehicle seat (1) according to claim 1,
**characterised in that**
the first end (13) of the first lever element (6) is rotatably connected to the first scissor arm (6) by means of a first swivel axis (17) and the first end (15) of the second lever element (7) is rotatably connected to the second scissor arm (7) by means of a second swivel axis (18) and the second end (14) of the first lever element (6), the second end (16) of the second lever element (7) and the second end of the damper (10) are connected by means of a third swivel axis (19).

3. Vehicle seat (1) according to claim 2,
**characterised in that**
in a first state (20) in which the vehicle seat is completely compressed, a first connection line (23) between the first swivel axis (17) and the third swivel axis (19) and a second connection line (24) between the second swivel axis (18) and the third swivel axis (19) form an acute angle (25), the angle (25) preferably being smaller than 10°, more preferably smaller than 5° and particularly preferably smaller than 3°.

4. Vehicle seat (1) according to either claim 2 or claim 3,
**characterised in that**
in a second state (21) in which the vehicle seat (1) is completely extended, a first connection line (23) between the first swivel axis (17) and the third swivel axis (19) and a second connection line (24) between the second swivel axis (18) and the third swivel axis (19) form either an obtuse angle (25), the angle (25) being preferably larger than 170° and more preferably larger than 175°, or an angle (25) of 180°.

5. Vehicle seat (1) according to any of claims 2 to 4,
**characterised in that**
the first lever element (11) is U-shaped when viewed in at least one direction that is perpendicular to the first swivel axis (17) and comprises a first leg (26) and a second leg (27), the first leg (26) being rotatably connected to the first scissor arm (6) and the second leg (27) being rotatably connected to the third swivel axis (19).

6. Vehicle seat (1) according to any of claims 2 to 5,
**characterised in that**
the second lever element (12) is plate-like.

7. Vehicle seat (1) according to claim 5,
**characterised in that**
the second end (16) of the second lever element (12) is arranged between the first leg (26) and the second leg (27) when viewed in the direction of longitudinal extension of the third swivel axis (19).

8. Vehicle seat (1) according to any of claims 2 to 7,
**characterised in that**
the first scissor arm (6) and the second scissor arm (7) each comprise a floating bearing (28) and a fixed bearing (29), the fixed bearing (29) of the first scissor arm (6) being connected to the upper seat part (2) and the fixed bearing (29) of the second scissor arm (7) being connected to the lower seat part (3).

9. Vehicle seat (1) according to claim 8,
**characterised in that**
a distance between the first swivel axis (17) and the common swivel axis (8) is smaller than a distance between the first swivel axis (17) and the floating bearing (28) of the first scissor arm (6), and a distance between the second swivel axis (18) and the common swivel axis (8) being smaller than a distance between the second swivel axis (18) and the floating bearing (28) of the second scissor arm (7).

10. Vehicle seat (1) according to any of the preceding claims,
**characterised in that**
the vehicle seat (1) also comprises a pneumatic spring (30) for cushioning the vehicle seat (1), the pneumatic spring (30) being connected to the scissor-action frame (4) on the one hand and to the upper seat part (2) or the lower seat part (3) on the other hand.

11. Commercial vehicle, comprising a vehicle seat (1) according to any of claims 1 to 10.

## Revendications

1. Siège de véhicule (1) comportant une partie supérieure de siège (2) et une partie inférieure de siège (3), la partie supérieure de siège (2) et la partie inférieure de siège (3) étant reliées par un châssis à ciseaux (4), et comportant un amortisseur (5), dans lequel le châssis à ciseaux (4) présente un premier bras de ciseau (6) et un second bras de ciseau (7), dans lequel le premier bras de ciseau (6) et le second bras de ciseau (7) sont montés à rotation autour d'un axe de rotation commun (8), dans lequel une première extrémité (9) de l'amortisseur (5) est reliée à rotation au premier bras de ciseau (6),
**caractérisé par le fait qu'**
un premier élément levier (11) et un second élément levier (12) sont prévus, une première extrémité (13) du premier élément levier (11) étant reliée à rotation au premier bras de ciseau (6) et une première extrémité (15) du second élément levier (12) étant reliée à rotation au second bras de ciseau (7) et une seconde extrémité (10) de l'amortisseur étant reliée à rotation non seulement à une seconde extrémité (14) du premier élément levier (11) mais encore à une seconde extrémité (16) du second élément levier (12).

2. Siège de véhicule (1) selon la revendication 1,
**caractérisé par le fait que**
la première extrémité (13) du premier élément levier (6) est reliée à rotation au premier bras de ciseau (6) au moyen d'un premier axe de rotation (17) et la première extrémité (15) du second élément levier (7) est reliée à rotation au second bras de ciseau (7) au moyen d'un deuxième axe de rotation (18) et la seconde extrémité (14) du premier élément levier (6), la seconde extrémité (16) du second élément levier (7) et la seconde extrémité de l'amortisseur (10) sont reliées au moyen d'un troisième axe de pivotement (19.

3. Siège de véhicule (1) selon la revendication 2,
**caractérisé par le fait que**
dans un premier état (20) dans lequel le siège de véhicule est totalement enfoncé, une première ligne de liaison (23) entre le premier axe de pivotement (17) et le troisième axe de pivotement (19) et une seconde ligne de liaison (24) entre le deuxième axe de pivotement (18) et le troisième axe de pivotement (19) forment un angle aigu (25), l'angle (25) étant, de préférence, inférieur à 10°, de manière davantage préférée inférieur à 5° et, de manière particulièrement préférée, inférieur à 3°.

4. Siège de véhicule (1) selon l'une des revendications 2 et 3,
**caractérisé par le fait que**
dans un second état (21) dans lequel le siège de véhicule (1) est totalement remonté, une première ligne de liaison (23) entre le premier axe de pivotement (17) et le troisième axe de pivotement (19) et une seconde ligne de liaison (24) entre le deuxième axe de pivotement (18) et le troisième axe de pivotement (19) forment soit un angle obtus (25), l'angle (25) étant, de préférence, supérieur à 170° et de manière davantage préférée supérieur à 175°, soit un angle (25) de 180°.

5. Siège de véhicule (1) selon l'une des revendications 2 à 4,
**caractérisé par le fait que**
le premier élément levier (11) est réalisé en forme de U vu dans au moins une direction qui est perpendiculaire au premier axe de rotation (17) et comporte une première aile (26) et une seconde aile (27), la première aile (26) étant reliée à rotation au premier bras de ciseau (6) et la seconde aile (27) étant reliée à rotation au troisième axe de rotation (19).

6. Siège de véhicule (1) selon l'une des revendications 2 à 5,
**caractérisé par le fait que**
le second élément levier (12) est réalisé en forme de plaque.

7. Siège de véhicule (1) selon la revendication 5,
**caractérisé par le fait que**
la seconde extrémité (16) du second élément levier (12) est disposée entre la première aile (26) et la seconde aile (27) vu dans la direction d'étendue longitudinale du troisième axe de rotation (19).

8. Siège de véhicule (1) selon l'une des revendications 2 à 7,
**caractérisé par le fait que**
le premier bras de ciseau (6) et le second bras de ciseau (7) présentent respectivement un palier libre (28) et un palier fixe (29), le palier fixe (29) du premier bras de ciseau (6) étant relié à la partie supérieure de siège (2) et le palier fixe (29) du second bras de ciseau (7) étant relié à la partie inférieure de siège (3).

9. Siège de véhicule (1) selon la revendication 8,
**caractérisé par le fait qu'**
une distance entre le premier axe de rotation (17) et l'axe de rotation commun (8) est inférieure à une distance entre le premier axe de rotation (17) et le palier libre (28) du premier bras de ciseau (6), et dans lequel une distance entre le deuxième axe de rotation (18) et l'axe de rotation commun (8) est inférieure à une distance entre le deuxième axe de rotation (18) et le palier libre (28) du second bras de ciseau (7).

10. Siège de véhicule (1) selon l'une des revendications précédentes,
**caractérisé par le fait que**
le siège de véhicule (1) comporte en outre un ressort pneumatique (30) pour l'amortissement du siège de véhicule (1), le ressort pneumatique (30) étant relié, d'une part, au châssis à ciseaux (4) et, d'autre part, à la partie supérieure de siège (2) ou à la partie inférieure de siège (3).

11. Véhicule utilitaire, comportant un siège de véhicule (1) selon l'une des revendications 1 à 10.
